# EUROPÄISCHE PATENTSCHRIFT

(11) **EP 0 943 037 B1**
(45) Veröffentlichungstag und Bekanntmachung des Hinweises auf die Patenterteilung: **13.02.2002**
(21) Anmeldenummer: 97953741.2
(22) Anmeldetag: 04.12.1997
(51) Int. Cl.: E02D 3/026, B60B 19/00

(54) **BANDAGE FÜR WALZEN ZUR BODENVERDICHTUNG**
TIRE FOR ROLLERS DESIGNED FOR COMPACTING SOIL
BANDAGE POUR CYLINDRES DESTINES AU COMPACTAGE DU SOL

(30) Priorität: 05.12.1996 DE 29621103 U
(43) Veröffentlichungstag der Anmeldung: 22.09.1999
(73) Patentinhaber: WACKER-WERKE GMBH & CO. KG, 80809 München (DE)
(72) Erfinder: BARBULESCU, Bogdan, D-81667 München (DE)
(74) Vertreter: Müller . Hoffmann & Partner Patentanwälte
(86) Internationale Anmeldenummer: EP9706795
(87) Internationale Veröffentlichungsnummer: WO9824981

(56) Entgegenhaltungen:
- GB-A- 441 375
- "Who says wheels have to be round?" MACHINE DESIGN., Bd. 43, Nr. 20, 19.August 1971, CLEVELAND US, Seite 110 XP002060024

## Beschreibung

Die Erfindung bezieht sich auf eine Bandage für Walzen, insbesondere Vibrationswalzen, zur Bodenverdichtung gemäß dem einleitenden Teil des Patentanspruchs 1.

Gegenüber den häufig anzutreffenden bekannten Walzenbandagen mit einem zylindrischen Mantel, die speziell auf Steigungen, aber auch bei ungünstigen Bodenverhältnissen eine schlechte Traktion im Gelände aufweisen und unter diesen erschwerten Betriebsbedingungen zum Schlüpfen neigen, haben Bandagen gemäß dem einleitenden Teil des patentanspruchs 1 den Vorteil einer zuverlässigeren Traktion unter diesen erschwerten Bedingungen.

Bei den bekannten Bandagen dieser Art, die bisher nur bei statischen Walzen eingesetzt wurden, ist der Bandagenmantel aus rechteckigen Mantelabschnitten zusammengesetzt, deren lange Seitenkanren sich parallel zur Drehachse der Bandage erstrekken. Diese Mantelform bewirkt zwar die gewünschte zuverlässigere Traktion, weil die sich über die Bandagenbreite erstreckenden Knicklinien zwischen den ebenen Oberflächenabschnitten immer wieder in den Boden eingraben, doch besteht die erhöhte Traktion nur auf die Dauer des Eingriffs einer solchen Knicklinie in den Boden, während eine erhöhte Schlupfgefahr besteht, wenn der einer eingreifenden Knicklinie jeweils folgende ebene rechteckige Oberflächenabschnitt flach auf dem Boden aufliegt. Aus diesem Grunde eignen sich aus rechteckigen Flächenabschnitten gebildeten Bandagen auch nicht für eine Verwendung in Verbindung mit einer Vibrationswalze, bei der die Bandagen von einem eine Kreisschwingung oder eine gerichtete Schwingung erzeugenden Schwingungserreger in Vibration versetzt werden.

Die bekannten Bandagen mit einem aus rechteckigen ebenen Abschnitten gebildeten Bandagenmantel haben auch den Nachteil eines beträchtlich ruckartigen Laufs, wobei die Ungleichförmigkeit um so größer ist, aus je weniger Rechtecken sich der Mantel zusammensetzt.

Zur Verbesserung der Traktion ist im Stande der Technik auch vorgeschlagen worden, die Bandagenoberfläche mit Stollen zu versehen. Abgesehen von einer häufig nicht gewünschten übermäßigen Verformung an der Oberfläche des zu verdichtenden Bodens haben Stollenbandagen den großen Nachteil, daß sich das Verdichtungsgut zwischen den Stollen festsetzen kann und die Stollenbandage weitaus schwieriger zu reinigen ist als eine Bandage mit einer glatten oder aus ebenen Abschnitten zusammengesetzten Oberfläche.

Ausgehend von dem vorgenannten Stand der Technik liegt der Erfindung die Aufgabe zugrunde, eine auch und insbesondere für den Einsatz bei Vibrationswalzen geeignete Bandage zu schaffen, die sich durch eine gegenüber zylindrischen Bandagen und auch gegenüber den bekannten Bandagen mit aus ebenen Abschnitten gebildetem Mantel wesentlich bessere Traktion und ferner durch einen gegenüber den letztgenannten bekannten Bandagen wesentlich besseren Rundlauf auszeichnet und zudem auch noch sehr leicht zu reinigen ist.

Die vorstehende Aufgabe wird durch die Merkmale des Patentanspruchs 1 gelöst.

Die erfindungsgemäße Bandagengestaltung bewirkt, daß sich im Betrieb der Bandage praktisch in jeder Winkelstellung von dieser mindestens eine Teillänge einer ihrer abgewinkelten, sich über die Bandagenbreite erstreckenden Knicklinien im Eingriff mit dem Boden befindet und so auch auf Steigungen für eine ununterbrochene im wesentlichen schlupffreie Traktion sorgt. Der ineinander übergehende Bodeneingriff der aufeinander folgenden Bandagen-Knicklinien zwischen den ebenflächigen Mantelabschnitten hat im Vergleich zu den aus rechteckigen Mantelabschnitten zusammengesetzten Bandagen, bei denen die einzelnen Flächenabschnitte nacheinander ruckartig auf den Boden klappen, auch einen wesentlich gleichmäßigeren und runderen Lauf der Bandage zur Folge, und die flächigen Mantelabschnitte übertragen im Falle des Einsatzes von Schwingungserregern die Rüttelkräfte mit einem besonders hohen Wirkungsgrad in den Boden. Die Flächenäuflast ist hierbei ähnlich wie bei Vibrationsplatten. Hinzu kommt, daß die hohe Linienlast an den Stoßstellen zwischen den einzelnen ebenen Mantelabschnitten den Verdichtungsvorgang noch weiter begünstigt.

Vorzugsweise sind die ebenen dreieckigen oder trapezförmigen Mantelabschnitte untereinander formgleich und haben jeweils die Form eines gleichschenkligen Dreiecks oder Trapezes wobei sie mit den gleich langen Schenkeln aneinander angrenzen.

Eine weitere bevorzugte Ausführungsform der erfindungsgemäßen Bandage besteht darin, daß mehrere aneinandergrenzende Mantelabschnitte aus einer gemeinsamen Platte durch Biegen von dieser hergestellt sind, wofür sich besonders gut die Biegetechnik mit Laserstrahl eignet.

Wie bei Verdichtungswalzen üblich, können auch bei einer Walze mit erfindungsgemäßen Bandagen diese einzeln über die ganze Walzenbreite reichen oder bei den einzelnen Achsen jeweils zu mehreren mit fluchtenden Drehachsen nebeneinander angeordnet sein.

Die Erfindung wird nachstehend anhand der Zeichnung an Ausführungsbeispielen noch näher erläutert.

In der Zeichnung zeigt jeweils in schematischer Darstellung:
- Fig. 1: eine zweiachsige Bodenverdichtungswalze mit je zwei erfindungsgemäßen Bandagen je Achse, in perspektivischer Ansicht,
- Fig. 2a bis 2d: drei aus einer unterschiedlichen Anzahl von gleichschenkligen Dreiecken zusammengesetzte Bandagenmäntel, und zwar links jeweils in isometrischer Darstellung und rechts daneben in Ansicht von vorn,
- Fig. 3a bis 3c: drei weitere aus einer unterschiedlichen Anzahl von gleichschenkligen Dreiecken zusammengesetzte Bandagenmäntel, wobei in den einzelnen Figuren die unteren drei der übereinander befindlichen Darstellungen die betreffende Bandage in Ansicht von oben in verschienenen Winkelpositionen um ihre Drehachse gezeigt sind und die oberste Darstellung die jeweilige Bandage von vorne gesehen wiedergibt, und
- Fig. 4: eine Ausführungsform der Bandage, bei der die ebenen Mantelabschnitte, aus denen der Mantel zusammengesetzt ist, die Form von gleichschenkligen Trapezen haben.

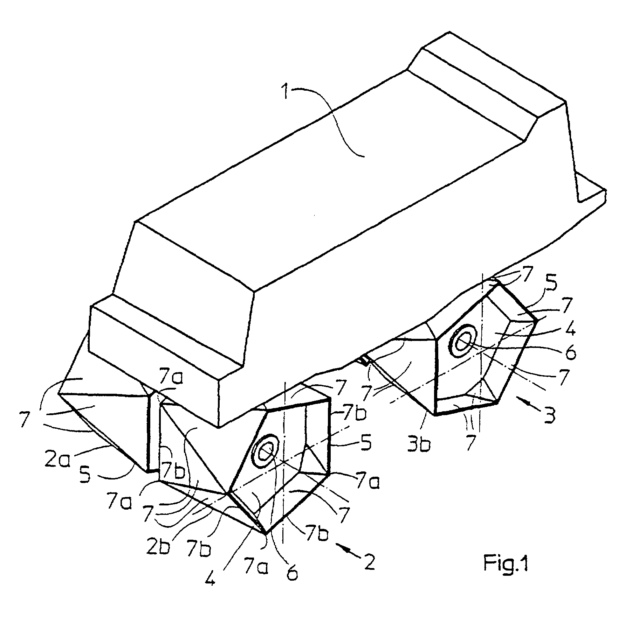

Die in Fig. 1 sehr schematisch dargestellte Walze weist ein Walzengestell 1 auf, in dem die üblichen Antriebsaggregate und Steuerungen untergebracht sind. Unter dem Walzengestell 1 sind zwei Paare von jeweils in der Walzenmitte fliegend gelagerten Walzenbandagen jeweils gleichachsig angeordnet, wobei bei mindestens einer der beiden Achsen die Bandagen auf irgendeine bekannte Weise von dem Hauptantriebsaggregat im Walzengestell 1 her angetrieben sind und in ihnen in bekannter Weise Schwingungserreger angeordnet sein können, die die Bandagen 2a, 2b, 3a (in der Zeichnung nicht zu sehen) und 3b in Vibration versetzen können. Die einzelnen Bandagen 2a, 2b, 3a und 3b weisen jeweils beidseitig Lagerschilde 4 und einen Bandagenmantel 5 auf, und sie sind, um Fahrachsen 6 drehbar, an dem in der Zeichnung nicht zu sehenden, in der Walzenmitte befindlichen und ggf. lenkbaren Bandagenträger gelagert.

Bei der Ausführung nach Fig. 1 ist jeder Bandagenmantel 5 aus zehn ebenen Mantelabschnitten 7 zusammengesetzt, von denen jeder die Form eines gleichschenkligen Dreiecks aufweist, wobei einander benachbarte Mantelabschnitte 7 jeweils eine gleich lange Dreiecksseite gemeinsam haben. Die ebenen, dreieckigen Mantelabschnitte 7 sind so angeordnet, daß an jeder Stirnseite der Bandage in deren Umfangsrichtung abwechselnd einer Dreiecksspitze 7a eines vorhergehenden Mantelabschnitts 7 eine Dreiecksseite 7b des anschließenden Mantelabschnitts 7 folgt und jeder Dreieckseite 7b auf einer der Bandagen-Stirnseiten auf der gegenüberliegenden Bandagen-Stirnseite eine Dreieckspitze 7a mittig gegenübersteht.

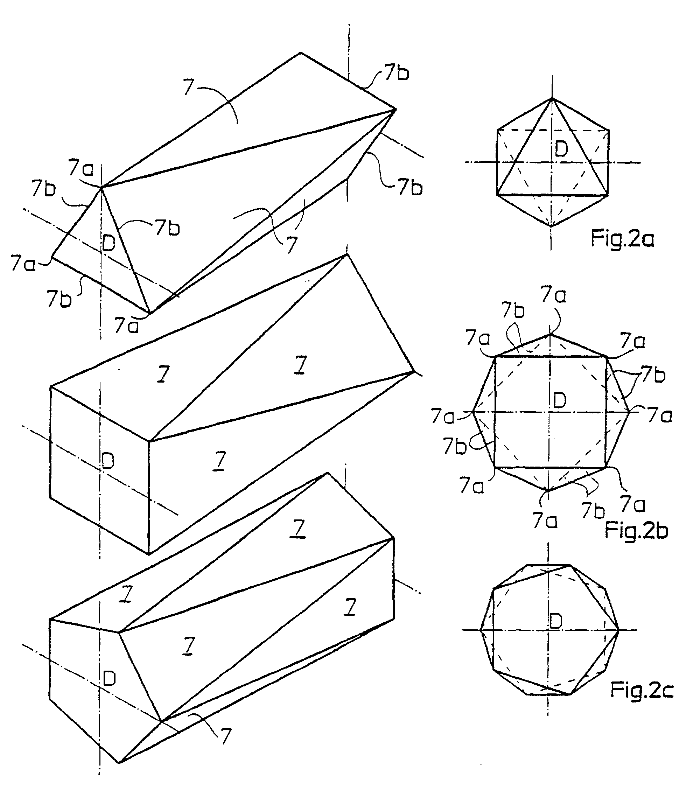

Die Fig. 2a bis 2c zeigen jeweils links in perspektivischer Darstellung und rechts in Ansicht von vorne verschiedene mögliche Mantelformen, wobei diejenige gemäß Fig. 2c im Prinzip den bei den Bandagen gemäß Fig. 1 verwendeten entspricht, jedoch eine größere Länge aufweist als diese und bei einer Bandage einsetzbar wäre, die an ihren beiden Stirnseiten gelagert ist und sich über die gesamte Walzenbreite erstreckt.

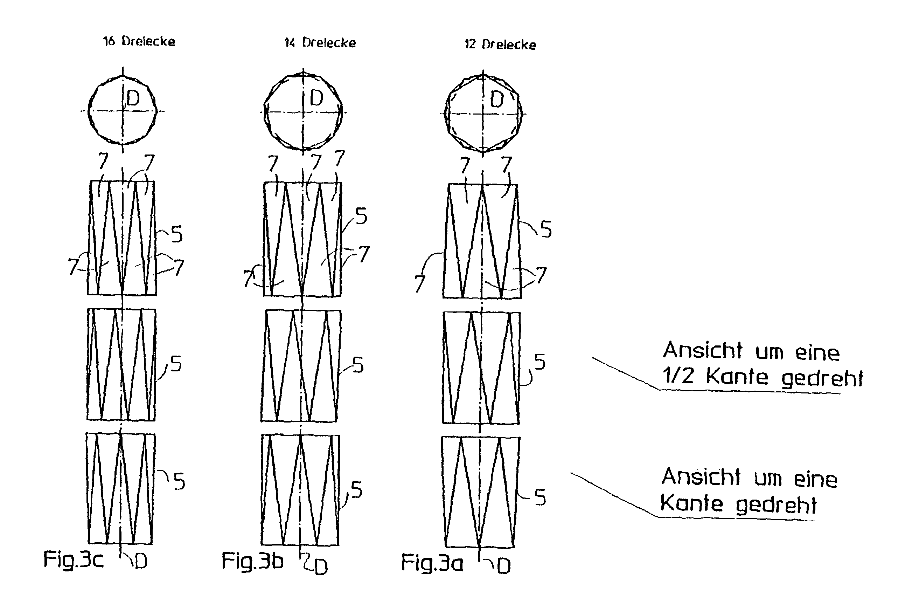

Weitere mögliche Bandagenmantelformen sind in den Fig. 3a - 3c dargestellt, wobei in den einzelnen Figuren übereinander die Bandagenmäntel 5 in Ansicht von oben in drei jeweils um eine halbe Kante gedrehten Winkelpositionen wiedergegeben bzw. - ganz oben - in Frontansicht dargestellt sind.

Den Frontansichten in Fig. 2a - 2c und Fig. 3a - 3c ist zu entnehmen, daß der Abstand, den die Symmetrielinie eines jeden Flächendreiecks von der Drehachse D der Bandage aufweist, ausgehend von der Dreiecksseite 7b auf der einen Bandagenmantelstirnseite zur Ecke 7a auf der anderen, gegenüberliegenden Bandagenmantelstirnseite linear zunimmt, so daß die Knicklinien zwischen den Flächendreiecken 7 beim Abrollen der Bandage auf dem Boden allmählich von der einen zu der anderen Stirnseite hin in den Boden eingepreßt und danach wieder herausgeholt werden. Dies gewährleistet eine ununterbrochene, in der Regel schlupffreie, hohe Traktion, wobei auch, im Falle des Einsatzes von Schwingungserregern, die Rüttelkräfte optimal in den Boden eingeleitet werden.

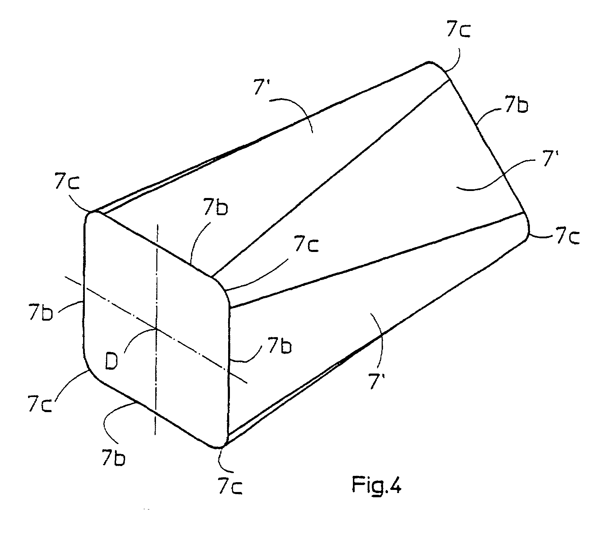

Die Fig. 4 zeigt eine Ausführung, bei der die ebenen Mantelabschnitte 7' aus gleichschenkligen Trapezen bestehen, bei ihnen also im Vergleich zu den Ausführungsformen gemäß Fig. 1 bis Fig. 3c die Ecke 7a des Dreieckes abgeschnitten ist, so daß an der entsprechenden Bandagenstirnseite eine kurze Trapezseite 7c vorhanden ist. Diese Bandagenmantelform ist leichter herstellbar, sei es durch Biegen des Mantelmaterials an den Knicklinien bei Herstellung mehrerer Flächenabschnitte 7' aus einem Stück, sei es durch Zusammenschweißen einzelner trapezförmiger Flächenabschnitten an den zusammenstoßenden Kanten.

## Patentansprüche

1. Bandage (5) für Walzen, insbesondere Vibrationswalzen, zur Bodenverdichtung, bei der der Bandagenmantel aus ebenen Mantelabschnitten gebildet ist, **dadurch gekennzeichnet, daß** die Mantelabschnitte (7) die Form eines Dreiecks oder Trapezes aufweisen, wobei benachbarte Mantelabschnitte (7) jeweils eine gleich lange Dreieck- oder Trapezseite gemeinsam haben und so angeordnet sind, daß an den Stirnseiten der Bandage (5) in deren Umfangsrichtung abwechselnd einer Dreieckspitze bzw. einer kürzeren Trapezseite eines vorhergehenden Mantelabschnitts eine einer entsprechenden Dreieckspitze bzw. kürzeren Trapezseite gegenüberliegende Dreieckseite bzw. längere Trapezseite der anschließenden Mantelfläche folgt.

2. Bandage nach Anspruch 1, **dadurch gekennzeichnet, daß** die untereinander formgleichen Mantelabschnitte jeweils die Form eines gleichschenkligen Dreiecks oder Trapezes haben und mit den gleich langen Schenkeln aneinandergrenzen.

3. Bandage nach Anspruch 1 oder 2, **dadurch gekennzeichnet, daß** mehrere Mantelanschnitte aus einer gemeinsamen Platte durch Biegen von dieser hergestellt sind.

4. Ein- oder mehrachsige Walze zur Bodenverdichtung mit Bandagen nach Anspruch 1 oder 2, **dadurch gekennzeichnet, daß** bei den einzelnen Achsen jeweils mehrere Bandagen nach Anspruch 1 oder 2 mit fluchtenden Drehachsen nebeneinander angeordnet sind.

## Claims

1. Tyre (5) for rollers, in particular vibration rollers, designed for ground compacting, where the tyre outer is formed from flat outer sections, **characterised in that** the outer sections (7) are of a triangular or trapezium shape, wherein respective adjacent outer sections (7) have a triangular or trapezium side of equal length and are disposed such that on the end sides of the tyre (5) in its peripheral direction a triangular point or a shorter trapezium side of a preceding outer section is followed alternately by a triangular side or longer trapezium side, lying opposite a corresponding triangular point or shorter trapezium side of the subsequent outer surface.

2. Tyre according to claim 1, **characterised in that** the outer sections which have an identical shape each have the shape of an isosceles triangle or trapezium and abut against each other with the sides which are of equal length.

3. Tyre according to claim 1 or 2, **characterised in that** several outer sections are produced from a common plate by bending said plate.

4. Single- or multi-axle roller designed for ground compacting having tyres according to claim 1 or 2, **characterised in that** in the case of the individual axes in each case several tyres according to claim 1 or 2 are disposed next to each other with their axes of rotation in alignment.

## Revendications

1. Bandage (5) pour rouleaux, en particulier rouleaux vibrants, pour le compactage du sol, dans lequel l'enveloppe de bandage est constituée de parties d'enveloppe planes, **caractérisé en ce que** les parties d'enveloppe (7) ont la forme d'un triangle ou d'un trapèze, des parties d'enveloppe (7) voisines ayant chacune en commun un côté de triangle ou de trapèze de même longueur et étant disposées de manière que sur les côtés d'extrémité du bandage (5), dans leur direction périphérique, succède alternativement à un sommet de triangle, respectivement à un côté plus court du trapèze d'une partie d'enveloppe précédente, un côté de triangle, respectivement un côté de trapèze plus long, opposé à un sommet de triangle, respectivement à un côté de trapèze plus court correspondant, de la surface d'enveloppe suivante.

2. Bandage selon la revendication 1, **caractérisé en ce que** les parties d'enveloppe de forme identique entre elles ont chacune la forme d'un triangle isocèle ou d'un trapèze isocèle et sont adjacentes les unes aux autres par les côtés de même longueur.

3. Bandage selon la revendication 1 ou 2, **caractérisé en ce que** plusieurs parties d'enveloppe sont fabriquées à partir d'une plaque commune par pliage de celle-ci.

4. Rouleau à un ou plusieurs axes pour le compactage du sol avec bandages selon la revendication 1 ou 2, **caractérisé en ce que** pour chacun des différents axes sont disposés côte à côte plusieurs bandages selon la revendication 1 ou 2 avec axes de rotation alignés.
